# EUROPÄISCHE PATENTANMELDUNG

(11) **EP 2 395 144 A2**
(43) Veröffentlichungstag der Anmeldung: **14.12.2011**
(21) Anmeldenummer: 11007463.0
(22) Anmeldetag: 14.09.2011
(51) Int. Cl.: D06F 58/08

(54) **Elektrischer Antrieb für Haushaltsgerät**

(71) Anmelder: V-Zug AG, CH-6301 Zug (CH)
(72) Erfinder: Leu, Samuel, 6276 Hohenrain (CH)
(74) Vertreter: Sutter, Kurt

(57) **Zusammenfassung**

Die Erfindung betrifft einen elektrischen Antrieb sowie einen Bausatz und ein Verfahren zur Herstellung eines solchen elektrischen Antriebs für die Anwendung in Haushaltsgeräten, insbesondere in Wäschetrocknern. Ein erfindungsgemässer elektrischer Antrieb umfasst dabei die Anordnung von einem oder zwei Elektromotoren (40,50) in einem gemeinsamen Gehäuse, welches aus zwei Gehäuseteilen (10,20) besteht. Optional können an den Gehäuseteilen (10,20) Getriebe (16) und/ oder Übersetzungsvorrichtungen (18) angeordnet sein. Axial zwischen den Gehäuseteilen (10,20) ist eine Trennwand (30) angeordnet, welche eine Halterung für ein oder zwei Achslager (35,36) bildet. Somit kann bei einer Bestückung des elektrischen Antriebs mit zwei Elektromotoren (40,50) ein Lagerschild eingespart werden und es ist eine kompakte Bauform realisierbar. Darüber hinaus ist aufgrund des modularen Aufbaus ein Einsatz des elektrischen Antriebs in verschiedenen Produktfamilien ermöglicht, ohne etwaige Befestigungsmittel anpassen zu müssen.

## Beschreibung

### Gebiet der Erfindung

Die Erfindung betrifft einen elektrischen Antrieb sowie einen Bausatz und ein Verfahren zur Herstellung eines elektrischen Antriebs für die Anwendung in Haushaltsgeräten, insbesondere in Wäschetrocknern.

### Hintergrund

Ein Wäschetrockner besitzt eine Wäschetrommel, in welche feuchte Wäsche eingebracht und durch einen durch diese Wäschetrommel laufenden Prozessluftstrom getrocknet werden kann. Während der Trocknungsphase rotiert die Wäschetrommel in eine Richtung oder abwechselnd in beide Richtungen (Reversierung). Die Wäschetrommel und ein Prozessluftventilator zur Erzeugung des Prozessluftstroms werden dabei von einem elektrischen Antrieb angetrieben.

US 6,745,495 B1 offenbart einen solchen Wäschetrockner mit einem ersten elektrischen Antrieb für die Wäschetrommel sowie mit einem zweiten elektrischen Antrieb in einem getrennten Gehäuse zum Antreiben des Prozessluftventilators.

Die offenbarte Lösung hat jedoch den Nachteil, dass zwei getrennte elektrische Antriebe benötigt werden, was sich negativ auf Produktionskosten und Platzbedarf im Gehäuse des Wäschetrockners auswirken kann.

### Darstellung der Erfindung

Es stellt sich vor diesem Hintergrund also die Aufgabe, einen verbesserten elektrischen Antrieb sowie einen Bausatz und ein Verfahren zur Herstellung eines solchen elektrischen Antriebs für ein Haushaltsgerät, insbesondere für einen Wäschetrockner, bereitzustellen.

Gemäss einem ersten Aspekt der Erfindung umfasst der elektrische Antrieb ein erstes Gehäuseteil mit einer ersten Aufnahmevorrichtung zur Aufnahme eines Achslagers, z.B. eines Kugellagers. Diese erste Aufnahmevorrichtung ist z.B. an einer Seitenwand des ersten Gehäuseteils angeordnet. Weiterhin umfasst das erste Gehäuseteil ein erstes Verbindungselement. Ein erstes Achslager (z.B. Kugellager) ist an der ersten Aufnahmevorrichtung des ersten Gehäuseteils angeordnet, z.B. indem es in die Aufnahmevorrichtung eingepresst wird.

Weiterhin umfasst der elektrische Antrieb ein zweites Gehäuseteil mit einer zweiten Aufnahmevorrichtung zur Aufnahme eines Achslagers, z.B. eines weiteren Kugellagers. Die zweite Aufnahmevorrichtung ist z.B. wiederum an einer Seitenwand des zweiten Gehäuseteils angeordnet. Weiterhin umfasst das zweite Gehäuseteil ein zweites Verbindungselement.

Im Weiteren umfasst der elektrische Antrieb eine Trennwand, welche zu einer Anordnung zwischen dem ersten und dem zweiten Gehäuseteil ausgestaltet ist, wobei die Trennwand mindestens eine dritte Aufnahmevorrichtung zur Aufnahme eines Achslagers aufweist sowie ein drittes und ein viertes Verbindungselement. Dabei sind das erste Gehäuseteil und die Trennwand mittels des ersten Verbindungselements des ersten Gehäuseteils und des dritten Verbindungselements der Trennwand mechanisch miteinander verbunden, z.B. reversibel lösbar mittels Schraubverbindungen und/ oder Steckverbindungen oder fest durch z.B. Press-, Schweiss- oder Nietverbindungen. Ebenso sind das zweite Gehäuseteil und die Trennwand mittels des zweiten Verbindungselements des zweiten Gehäuseteils und des vierten Verbindungselements der Trennwand mechanisch miteinander verbunden, z.B. wieder reversibel lösbar oder fest (s.o.).

Der elektrische Antrieb umfasst weiterhin ein zweites Achslager angeordnet an der zweiten Aufnahmevorrichtung des zweiten Gehäuseteils und/ oder ein drittes Achslager angeordnet an der dritten Aufnahmevorrichtung der Trennwand. Ausserdem umfasst der elektrische Antrieb mindestens einen ersten Elektromotor im ersten Gehäuseteil, welcher eine erste Achse besitzt. Diese erste Achse ist im ersten Achslager des ersten Gehäuseteils sowie im zweiten oder im dritten Achslager gegenüber den Gehäuseteilen und der Trennwand rotierbar aufgenommen.

In einer bevorzugten Ausführungsform umfasst der elektrische Antrieb weiterhin einen zweiten Elektromotor im zweiten Gehäuseteil, welcher eine zweite Achse besitzt. In dieser Ausführungsform weist die Trennwand zusätzlich eine vierte Aufnahmevorrichtung für ein viertes Achslager auf, an welcher ein solches viertes Achslager (z.B. ein Kugellager) angeordnet ist. Die erste Achse des ersten Elektromotors ist dann im ersten Achslager am ersten Gehäuseteil sowie im dritten Achslager an der Trennwand gegenüber den Gehäuseteilen und der Trennwand rotierbar aufgenommen. Die zweite Achse des zweiten Elektromotors ist im zweiten Achslager am zweiten Gehäuseteil sowie im vierten Achslager an der Trennwand gegenüber den Gehäuseteilen und der Trennwand rotierbar aufgenommen. Diese Ausführungsform hat den Vorteil, dass zwei Elektromotoren zum unabhängigen Antreiben verschiedener Komponenten des Haushaltsgeräts (z.B. Trommel und Prozessluftventilator) in einem Antriebsgehäuse untergebracht werden können. Somit können die Kosten und der Platzbedarf gesenkt werden. Insbesondere eröffnet diese Ausführungsform die Möglichkeit, zwei Elektromotoren in nur einem Gehäuse in einem kompakten Bauraum unterzubringen.

In einer weiteren bevorzugten Ausführungsform sind das erste, das zweite und das dritte Achslager koaxial zueinander angeordnet. Die erste und optionale zweite Achse des/der Elektromotor(en) kann/können somit aus dem ersten bzw. zweiten Gehäuseteil des elektrischen Antriebs koaxial an gegenüberliegenden Seitenwänden herausragen. Somit kann ein platzsparenderer elektrischer Antrieb realisiert werden.

In einer anderen bevorzugten Ausführungsform ist am ersten Gehäuseteil ein erstes Getriebe und/oder eine Übersetzungsvorrichtung angeordnet, auf welches mittels der ersten Achse des ersten Elektromotors eine Drehbewegung eines Rotors des ersten Elektromotors gegenüber dem ersten Gehäuseteil übertragen werden kann. Somit kann die Drehbewegung des ersten Elektromotors durch das erste Getriebe bzw. die Übersetzungsvorrichtung über- bzw. untersetzt werden. Ebenfalls ist durch das Getriebe optional eine bedarfsweise Drehrichtungsumkehr möglich.

In einer weiteren bevorzugten Ausführungsform ist die Ausdehnung a der Trennwand entlang einer axialen Koordinatenachse x (ohne Aufnahmevorrichtungen für Achslager) "dünn" (d.h. maximal 25%) im Vergleich zu ihrer lateralen Ausdehnung b (d.h. entlang einer zu x senkrechten Koordinatenachse y). Somit kann eine kompaktere Bauform für den elektrischen Antrieb realisiert werden.

Gemäss einem weiteren Aspekt der Erfindung umfasst der elektrische Antrieb ein erstes Gehäuseteil mit einer ersten Aufnahmevorrichtung zur Aufnahme eines Achslagers, z.B. eines Kugellagers. Diese erste Aufnahmevorrichtung ist z.B. an einer Seitenwand des ersten Gehäuseteils angeordnet. Weiterhin umfasst das erste Gehäuseteil ein erstes Verbindungselement. Ein erstes Achslager (z.B. Kugellager) ist an der ersten Aufnahmevorrichtung des ersten Gehäuseteils angeordnet, z.B. indem es in die Aufnahmevorrichtung eingepresst wird. Weiterhin umfasst der elektrische Antrieb ein zweites Gehäuseteil mit einer zweiten Aufnahmevorrichtung zur Aufnahme eines Achslagers, z.B. eines weiteren Kugellagers. Die zweite Aufnahmevorrichtung ist z.B. an einer Seitenwand des zweiten Gehäuseteils angeordnet. Weiterhin umfasst das zweite Gehäuseteil ein zweites Verbindungselement. Im Weiteren umfasst der elektrische Antrieb einen Zwischenring, welcher zu einer Anordnung zwischen dem ersten und dem zweiten Gehäuseteil ausgestaltet ist, wobei der Zwischenring zwei Verbindungselemente aufweist, welche im Folgenden als fünftes und sechstes Verbindungselement bezeichnet werden. Dabei sind das erste Gehäuseteil und der Zwischenring mittels des ersten Verbindungselements des ersten Gehäuseteils und des fünften Verbindungselements des Zwischenrings mechanisch miteinander verbunden, z.B. reversibel lösbar mittels Schraubverbindungen und/ oder Steckverbindungen oder fest durch z.B. Press-, Schweiss-oder Nietverbindungen. Ebenso sind das zweite Gehäuseteil und der Zwischenring mittels des zweiten Verbindungselements des zweiten Gehäuseteils und des sechsten Verbindungselements des Zwischenrings mechanisch miteinander verbunden, z.B. wieder reversibel lösbar oder fest (s.o.). Der elektrische Antrieb umfasst weiterhin ein zweites Achslager angeordnet an der zweiten Aufnahmevorrichtung des zweiten Gehäuseteils. Ausserdem umfasst der elektrische Antrieb einen ersten Elektromotor im ersten oder zweiten Gehäuseteil, welcher eine Achse besitzt. Diese Achse ist im ersten Achslager des ersten Gehäuseteils sowie im zweiten Achslager des zweiten Gehäuseteils gegenüber den Gehäuseteilen und dem Zwischenring rotierbar aufgenommen. Explizit umfasst der elektrische Antrieb keine Trennwand. Somit ist eine materialsparendere Produktion möglich.

Gemäss einem weiteren Aspekt der Erfindung umfasst der elektrische Antrieb ein Gehäuseteil mit einer ersten Aufnahmevorrichtung zur Aufnahme eines Achslagers, z.B. eines Kugellagers. Diese erste Aufnahmevorrichtung ist z.B. an einer Seitenwand des ersten Gehäuseteils angeordnet. Weiterhin umfasst das erste Gehäuseteil ein erstes Verbindungselement. Ein erstes Achslager (z.B. Kugellager) ist an der ersten Aufnahmevorrichtung des ersten Gehäuseteils angeordnet, z.B. indem es in die Aufnahmevorrichtung eingepresst wird. Im Weiteren umfasst der elektrische Antrieb eine Trennwand, welche eine offene Seite des ersten Gehäuseteils abschliesst und welche eine Aufnahmevorrichtung zur Aufnahme eines Achslagers aufweist sowie ein Verbindungselement (im Folgenden: drittes Verbindungselement). Dabei sind das erste Gehäuseteil und die Trennwand mittels des ersten Verbindungselements des ersten Gehäuseteils und des dritten Verbindungselements der Trennwand mechanisch miteinander verbunden, z.B. reversibel lösbar mittels Schraubverbindungen und/ oder Steckverbindungen oder fest durch z.B. Press-, Schweiss-oder Nietverbindungen. Der elektrische Antrieb umfasst weiterhin ein Achslager (im Folgenden: drittes Achslager) angeordnet an der dritten Aufnahmevorrichtung der Trennwand. Ausserdem umfasst der elektrische Antrieb einen Elektromotor im ersten Gehäuseteil, welcher eine Achse besitzt. Diese Achse ist im ersten Achslager des ersten Gehäuseteils sowie im dritten Achslager der Trennwand gegenüber dem Gehäuseteil und der Trennwand rotierbar aufgenommen. Explizit umfasst der elektrische Antrieb kein zweites Gehäuseteil. Somit ist eine platzsparende Realisierung möglich.

Gemäss einem weiteren Aspekt der Erfindung umfasst der elektrische Antrieb ein Gehäuseteil (im Folgenden: zweites Gehäuseteil) mit einer Aufnahmevorrichtung (im Folgenden: zweite Aufnahmevorrichtung) zur Aufnahme eines Achslagers, z.B. eines Kugellagers. Diese zweite Aufnahmevorrichtung ist z.B. an einer Seitenwand des zweiten Gehäuseteils angeordnet. Weiterhin umfasst das zweite Gehäuseteil ein Verbindungselement (im Folgenden: zweites Verbindungselement). Ein Achslager (z.B. Kugellager, im Folgenden: zweites Achslager) ist an der zweiten Aufnahmevorrichtung des zweiten Gehäuseteils angeordnet, z.B. indem es in die zweite Aufnahmevorrichtung eingepresst wird. Im Weiteren umfasst der elektrische Antrieb eine Trennwand, welche eine offene Seite des zweiten Gehäuseteils abschliesst und welche eine Aufnahmevorrichtung (im Folgenden: vierte Aufnahmevorrichtung) zur Aufnahme eines Achslagers aufweist sowie ein Verbindungselement (im Folgenden: viertes Verbindungselement). Dabei sind das zweite Gehäuseteil und die Trennwand mittels des zweiten Verbindungselements des zweiten Gehäuseteils und des vierten Verbindungselements der Trennwand mechanisch miteinander verbunden, z.B. reversibel lösbar mittels Schraubverbindungen und/ oder Steckverbindungen oder fest durch z.B. Press-, Schweiss- oder Nietverbindungen. Der elektrische Antrieb umfasst weiterhin ein Achslager (im Folgenden: viertes Achslager) angeordnet an der vierten Aufnahmevorrichtung der Trennwand. Ausserdem umfasst der elektrische Antrieb einen Elektromotor im zweiten Gehäuseteil, welcher eine Achse besitzt. Diese Achse ist im zweiten Achslager des zweiten Gehäuseteils sowie im vierten Achslager der Trennwand gegenüber dem Gehäuseteil und der Trennwand rotierbar aufgenommen. Explizit umfasst der elektrische Antrieb kein erstes Gehäuseteil. Somit ist eine platzsparende Realisierung möglich.

Gemäss einem weiteren Aspekt der Erfindung umfasst der elektrische Antrieb ein Gehäuseteil mit einer ersten Aufnahmevorrichtung zur Aufnahme eines Achslagers, z.B. eines Kugellagers. Diese erste Aufnahmevorrichtung ist z.B. an einer Seitenwand des ersten Gehäuseteils angeordnet. Weiterhin umfasst das erste Gehäuseteil ein erstes Verbindungselement. Ein erstes Achslager (z.B. Kugellager) ist an der ersten Aufnahmevorrichtung des ersten Gehäuseteils angeordnet, z.B. indem es in die Aufnahmevorrichtung eingepresst wird. Im Weiteren umfasst der elektrische Antrieb eine Trennwand, welche eine offene Seite des ersten Gehäuseteils abschliesst und welche eine Aufnahmevorrichtung zur Aufnahme eines Achslagers aufweist sowie ein Verbindungselement (im Folgenden: drittes Verbindungselement). Dabei sind das erste Gehäuseteil und die Trennwand mittels des ersten Verbindungselements des ersten Gehäuseteils und des dritten Verbindungselements der Trennwand mechanisch miteinander verbunden, z.B. reversibel lösbar mittels Schraubverbindungen und/ oder Steckverbindungen oder fest durch z.B. Press-, Schweiss-oder Nietverbindungen. Der elektrische Antrieb umfasst weiterhin ein Achslager (im Folgenden: drittes Achslager) angeordnet an der dritten Aufnahmevorrichtung der Trennwand. Ausserdem umfasst der elektrische Antrieb einen Elektromotor im ersten Gehäuseteil, welcher eine Achse besitzt. Diese Achse ist im ersten Achslager des ersten Gehäuseteils sowie im dritten Achslager der Trennwand gegenüber dem Gehäuseteil und der Trennwand rotierbar aufgenommen. Explizit umfasst der elektrische Antrieb kein zweites Gehäuseteil. Im Weiteren besitzt der elektrische Antrieb ein Getriebe und/oder eine Übersetzungsvorrichtung am ersten Gehäuseteil. Mittels der Achse des Elektromotors wird eine Drehbewegung des Elektromotors, spezifisch eines Rotors des Elektromotors, auf das Getriebe bzw. die Übersetzungsvorrichtung übertragen. Diese Drehbewegung wird z.B. über- oder untersetzt, oder die Drehrichtung der Drehbewegung kann im Getriebe optional bedarfsweise umgekehrt werden.

Erfindungsgemäss umfasst ein Bausatz zur Herstellung eines elektrischen Antriebs für ein Haushaltsgerät, insbesondere für einen Wäschetrockner, die folgenden Bauteile:
* ein erstes Gehäuseteil mit einer ersten Aufnahmevorrichtung zur Aufnahme eines Achslagers (z.B. eines Kugellagers) an einer Seitenwand des ersten Gehäuseteils sowie mit einem ersten Verbindungselement am ersten Gehäuseteil,
* ein zweites Gehäuseteil mit einer zweiten Aufnahmevorrichtung zur Aufnahme eines Achslagers (z.B. eines Kugellagers) an einer Seitenwand des zweiten Gehäuseteils sowie mit einem zweiten Verbindungselement am zweiten Gehäuseteil,
* eine Trennwand zu einer Anordnung zwischen dem ersten Gehäuseteil und dem zweiten Gehäuseteil, wobei die Trennwand mindestens eine dritte Aufnahmevorrichtung zur Aufnahme eines Achslagers sowie ein drittes und ein viertes Verbindungselement aufweist,

* mindestens zwei Achslager (z.B. Kugellager) zur Anordnung in jeweils einer der Aufnahmevorrichtungen,
* mindestens einen Elektromotor zur Anordnung in einem der Gehäuseteile und mit einer Achse, wobei die Achse derart ausgestaltet ist, dass sie in zwei Achslagern rotierbar aufnehmbar ist.

Dabei ist das erste Gehäuseteil mittels des ersten Verbindungselements und des dritten Verbindungselements mechanisch mit der Trennwand verbindbar, z.B. reversibel lösbar oder fest (s.o.) und das zweite Gehäuseteil ist mittels des zweiten Verbindungselements und des vierten Verbindungselements mechanisch mit der Trennwand verbindbar, ebenfalls z.B. reversibel lösbar oder fest (s.o.). An dieser Stelle soll weiterhin explizit darauf hingewiesen werden, dass zur Herstellung eines erfindungsgemässen elektrischen Antriebs nicht alle der genannten Bauteile des Bausatzes verwendet werden müssen.

Vorzugsweise umfasst der Bausatz weiterhin mindestens ein Getriebe und/oder mindestens eine Übersetzungsvorrichtung, welche(s) am ersten oder am zweiten Gehäuseteil (z.B. an einer Seitenwand) montierbar ist/sind und auf welche(s) mittels einer Achse des Elektromotors eine Drehbewegung eines Rotors des Elektromotors übertragen werden kann. Somit kann die Drehbewegung des Elektromotors durch das Getriebe bzw. die Übersetzungsvorrichtung über- oder untersetzt werden und/ oder bedarfsweise in ihrer Drehrichtung umgekehrt werden.

In einer anderen bevorzugten Ausführungsform kann der Bausatz zusätzlich einen Zwischenring (ohne Aufnahmevorrichtungen für Achslager) zu einer Anordnung zwischen dem ersten Gehäuseteil und dem zweiten Gehäuseteil umfassen, wobei der Zwischenring zwei Verbindungselemente (im Folgenden als fünftes und sechstes Verbindungselement bezeichnet) aufweist. Das erste Gehäuseteil ist mittels des ersten Verbindungselements und des fünften Verbindungselements mechanisch mit dem Zwischenring verbindbar, z.B. reversibel lösbar oder fest (vgl. wie oben beschrieben bei der Trennwand). Das zweite Gehäuseteil ist mittels des zweiten Verbindungselements und des sechsten Verbindungselements ebenfalls mechanisch mit dem Zwischenring verbindbar, ebenfalls z.B. reversibel lösbar oder fest (s.o.).

In einer besonders bevorzugten Ausführungsform entspricht eine axiale Ausdehnung a' des Zwischenrings einer axialen Ausdehnung a der Trennwand (entlang einer ersten Koordinatenachse x) und/ oder eine laterale Ausdehnung b' des Zwischenrings einer lateralen Ausdehnung b der Trennwand (entlang einer zweiten Koordinatenachse y, welche senkrecht auf der ersten Koordinatenachse x steht). Somit können die äusseren Abmessungen des elektrischen Antriebs unabhängig von der Verwendung des Zwischenrings oder der Trennwand sein. Somit ist eine modulare Einsetzbarkeit des elektrischen Antriebs in verschiedenen Konfigurationen gewährleistet.

Ein Verfahren zur Herstellung eines elektrischen Antriebs für ein Haushaltsgerät, insbesondere für einen Wäschetrockner, mittels einem der beanspruchten Bausätze umfasst die folgenden Schritte:
* Anordnung (z.B. durch Einpressen) je eines Achslagers an der ersten Aufnahmevorrichtung des ersten Gehäuseteils und an der dritten Aufnahmevorrichtung der Trennwand oder
   Anordnung (z.B. durch Einpressen) je eines Achslagers an der dritten Aufnahmevorrichtung des zweiten Gehäuseteils und an der vierten Aufnahmevorrichtung der Trennwand oder
   Anordnung (z.B. durch Einpressen) je eines Achslagers an der ersten Aufnahmevorrichtung des ersten Gehäuseteils und an der zweiten Aufnahmevorrichtung des zweiten Gehäuseteils oder
   Anordnung (z.B. durch Einpressen) je eines Achslagers an der ersten Aufnahmevorrichtung des ersten Gehäuseteils, an der dritten und an einer vierten Aufnahmevorrichtung der Trennwand und an der zweiten Aufnahmevorrichtung des zweiten Gehäuseteils,
* Anordnung des Elektromotors im ersten Gehäuseteil oder Anordnung eines Elektromotors im zweiten Gehäuseteil oder Anordnung eines ersten Elektromotors im ersten Gehäuseteil und Anordnung eines zweiten Elektromotors im zweiten Gehäuseteil,
* mechanische Verbindung des ersten Gehäuseteils mit der Trennwand mittels des ersten und des dritten Verbindungselements oder
   mechanische Verbindung des zweiten Gehäuseteils mit der Trennwand mittels des zweiten und des vierten Verbindungselements oder
   mechanische Verbindung des ersten und des zweiten Gehäuseteils mit der Trennwand mittels des ersten, zweiten, dritten und vierten Verbindungselements oder
   mechanische Verbindung des ersten und des zweiten Gehäuseteils mit dem Zwischenring mittels des ersten, zweiten, fünften und sechsten Verbindungselements,
* optional Montage eines Getriebes und/oder einer Übersetzungsvorrichtung an einem Gehäuseteil.

Ein elektrischer Antrieb für ein Haushaltsgerät, insbesondere für einen Wäschetrockner, aus mindestens einer Auswahl der Teile der oben beschriebenen Bausätze nach dem oben genannten Verfahren kann somit modular aufgebaut werden und unterschiedliche Funktionalitäten (z.B. ein oder zwei Elektromotoren, mit oder ohne Getriebe/ Übersetzungsvorrichtung etc.) aufweisen.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigt die
Figur 1 zeigt eine Schnittdarstellung durch einen elektrischen Antrieb gemäss einer ersten Ausführungsform umfassend zwei Gehäuseteile 10, 20, eine Trennwand 30 sowie zwei Elektromotoren 40, 50,
Figur 2 zeigt eine Schnittdarstellung durch einen elektrischen Antrieb gemäss einer zweiten Ausführungsform umfassend zwei Gehäuseteile 10, 20, einen Zwischenring 60 sowie einen Elektromotor 40,
Figur 3 zeigt eine Schnittdarstellung durch einen elektrischen Antrieb gemäss einer dritten Ausführungsform umfassend ein Gehäuseteil 10, eine Trennwand 30 sowie einen Elektromotor 40,
Figur 4 zeigt eine Schnittdarstellung durch einen elektrischen Antrieb gemäss einer vierten Ausführungsform umfassend ein Gehäuseteil 20, eine Trennwand 30 sowie einen Elektromotor 50, und
Figur 5 zeigt eine Schnittdarstellung durch einen elektrischen Antrieb gemäss einer fünften Ausführungsform umfassend ein Gehäuseteil 10, eine Trennwand 30, einen Elektromotor 40 sowie ein Getriebe 16.
Figur 6 zeigt eine Schnittdarstellung durch einen elektrischen Antrieb gemäss einer sechsten Ausführungsform umfassend ein Gehäuseteil 10, eine Trennwand 30, einen Elektromotor 40 sowie eine Übersetzungsvorrichtung 18.

### Wege zur Ausführung der Erfindung

Im Folgenden sind sechs verschiedene Ausführungsformen eines erfindungsgemässen elektrischen Antriebs für ein Haushaltsgerät beschrieben.

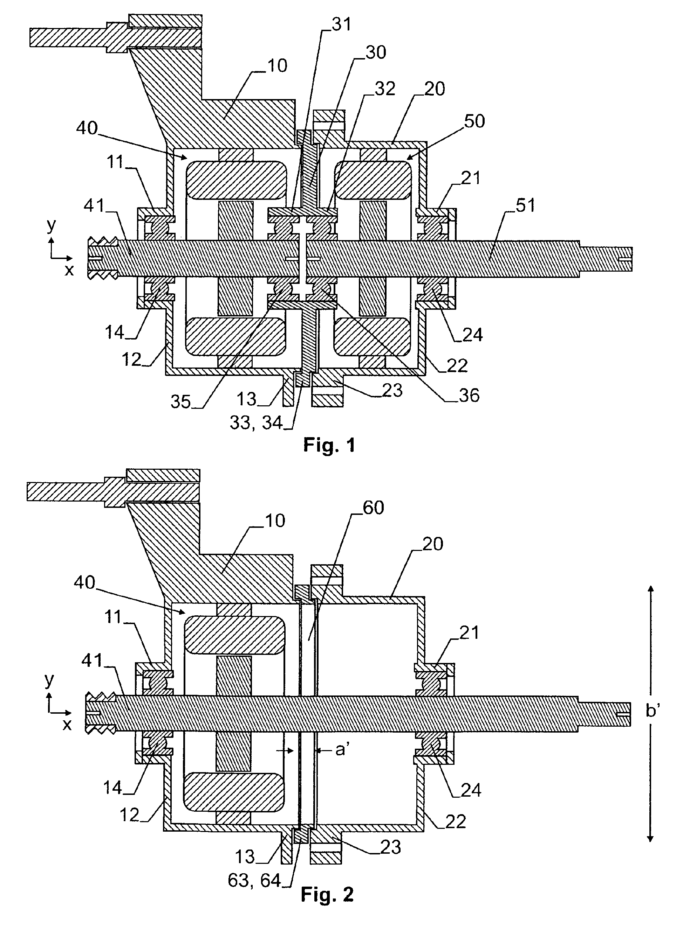

Figur 1 zeigt eine Schnittdarstellung durch einen elektrischen Antrieb gemäss einer solchen ersten Ausführungsform umfassend zwei Gehäuseteile 10, 20, eine Trennwand 30 axial angeordnet zwischen den beiden Gehäuseteilen 10, 20, sowie zwei Elektromotoren 40, 50, welche im ersten bzw. zweiten Gehäuseteil 10 bzw. 20 angeordnet sind. Der erste Gehäuseteil 10 umfasst dabei eine erste Aufnahmevorrichtung 11 für ein erstes Achslager 14 an der linken Seitenwand 12 des ersten Gehäuseteils 10. Das Achslager 14 (Kugellager) wird dabei in die Aufnahmevorrichtung 11 eingepresst und dient zur gegenüber den Gehäuseteilen 10, 20 rotierbaren Lagerung einer ersten Achse 41 des ersten Elektromotors 40 im ersten Gehäuseteil 10. An einer zweiten axialen (entlang der x-Koordinatenrichtung) Position ist die Achse 41 in einem (dritten) Achslager 35 gelagert, welches in einer (dritten) Aufnahmevorrichtung 31 an der Trennwand 30 angeordnet bzw. eingepresst ist.

Das erste Gehäuseteil 10 und die Trennwand 30 sind über ein erstes Verbindungselement 13 (selbstzentrierendes Profil mit überstehenden Stegen, Gewindebohrungen) am ersten Gehäuseteil 10 und ein drittes Verbindungselement 33 (Profil mit überstehenden Stegen, welches an das Profil am Gehäuseteil 10 eingreift) an der Trennwand 30 miteinander mechanisch verbunden. Ebenso sind das zweite Gehäuseteil 20 auf der gegenüberliegenden Seite der Trennwand 30 und die Trennwand 30 mittels eines zweiten Verbindungselements 23 (Profil mit überstehenden Stegen, Durchgangsbohrungen) am zweiten Gehäuseteil 20 und eines vierten Verbindungselements 34 (selbstzentrierendes Profil mit überstehenden Stegen, in welches das Profil am zweiten Gehäuseteil eingreift) an der Trennwand 30 miteinander mechanisch verbunden. Durch eine Verschraubung der beiden Gehäuseteile kommt die Trennwand 30 somit axial zwischen den beiden Gehäuseteilen 10, 20 lateral (d.h. entlang der y-Koordinatenrichtung) zentriert zum Liegen. Alternative Befestigungsvarianten beinhalten Verschweissungen, Vernietungen, Pressungen usw.

In einer zweiten Aufnahmevorrichtung 21 an der rechten Seitenwand 22 des zweiten Gehäuseteils 20 sowie in einer vierten Aufnahmevorrichtung 32 an der Trennwand 30 sind zwei weitere Achslager 24 bzw. 36 angeordnet bzw. eingepresst, welche eine zweite Achse 51 eines zweiten Elektromotors 50 im zweiten Gehäuseteil 20 rotierbar gegenüber den Gehäuseteilen 10, 20 lagern. Somit sind in einem gemeinsamen Gehäuse, welches durch die beiden Gehäuseteile 10 und 20 gebildet wird, zwei Elektromotoren 40 und 50 untergebracht. Das Gehäuse wird im Haushaltsgerät über geeignete Halterungsvorrichtungen an einem oder an beiden Gehäuseteilen 10, 20 und/oder an Flanschen der Aufnahmevorrichtungen 11 bzw. 21 gehalten.

Gegenüber konventionellen, nicht modularen elektrischen Antrieben kann somit ein Lagerschild eingespart werden, da die Trennwand 30 mit den beiden Aufnahmevorrichtungen 31 und 32 als gemeinsame Halterung für die beiden Achslager 35 und 36 dient. In einem Wäschetrockner kann der elektrische Antrieb nach dieser ersten Ausführungsform zum unabhängigen Antrieb der Wäschetrommel und des Prozessluftventilators eingesetzt werden. Die erste Achse 41 treibt dann z.B. über einen Riemenantrieb die Wäschetrommel an, bei Bedarf kann die Wäschetrommelrotation in ihrer Bewegungsrichtung umgekehrt (reversiert) und/oder in ihrer Drehzahl angepasst werden, z.B. um einen Verwicklungsschutz für sensitive Wäschestücke zu implementieren. Der Antrieb des Prozessluftventilators durch den zweiten Elektromotor 50 bleibt von dieser Reversierung bzw. Drehzahlanpassung jedoch unangetastet. Somit kann der Prozessluftventilator jederzeit in seiner bevorzugten Drehrichtung und mit optimaler Drehzahl angetrieben werden. Mit anderen Worten sind die Wahl der Laufrichtung und die Drehzahlregulierung unabhängig für beide Elektromotoren regelbar.

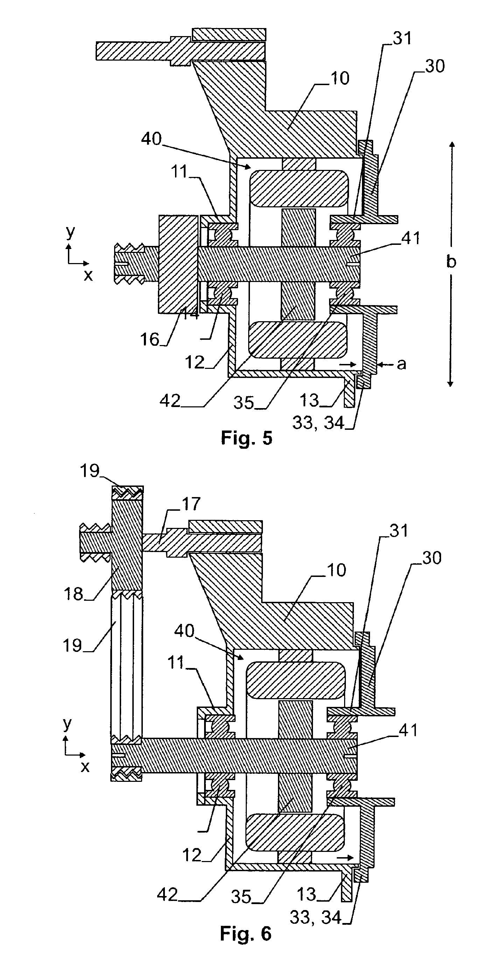

Ist eine solche unabhängige Richtungs- bzw. Drehzahlregelung nicht notwendig (z.B. in einer low-cost Version des Wäschetrockners in der gleichen Produktfamilie), so kann für ein solches Gerät ein elektrischer Antrieb nach einer zweiten Ausführungsform der Erfindung eingesetzt werden. Die Figur 2 zeigt eine Schnittdarstellung durch einen elektrischen Antrieb gemäss einer solchen zweiten Ausführungsform umfassend zwei Gehäuseteile 10, 20, einen Zwischenring 60 sowie einen Elektromotor 40. Vom prinzipiellen Aufbau ähnelt die zweite Ausführungsform der oben beschriebenen ersten Ausführungsform sehr stark. Als Abweichung zur ersten Ausführungsform wird statt der Trennwand 30 mit den beiden Aufnahmevorrichtungen 31 und 32 für die Achslager 35 und 36 in der zweiten Ausführungsform jedoch ein Zwischenring 60 eingesetzt, der sich in seinen Abmessungen (axiale Ausdehnung a' bzw. laterale Ausdehnung b') nicht von denen der Trennwand 30 (axiale Ausdehnung a bzw. laterale Ausdehnung b, jeweils ohne die Aufnahmevorrichtungen 31 und 32, siehe Figur 5) unterscheidet. Dieser Zwischenring 60 umfasst im Gegensatz zur Trennwand 30 keine Aufnahmevorrichtungen 31 und 32 für Achslager 35, 36 und kann somit "innen offen", d.h. als "dünner Ring" im Gegensatz zur "geschlosseneren" Trennwand 30 hergestellt werden. Somit wird Material eingespart. Der Zwischenring 60 besitzt ein fünftes und ein sechstes Verbindungselement 63, 64, welche von ihrem Aufbau und ihrer Funktion den dritten bzw. vierten Verbindungselementen 33, 34 der Trennwand 30 entsprechen.

Als weiterer Unterschied ist in der zweiten Ausführungsform des elektrischen Antriebs nur ein Elektromotor 40 verbaut, dessen Achse 41 im ersten Achslager 14 in der ersten Aufnahmevorrichtung 11 am ersten Gehäuseteil 10 und im zweiten Achslager 24 in der zweiten Aufnahmevorrichtung 21 am zweiten Gehäuseteil 20 gegenüber den Gehäuseteilen 10, 20 rotierbar gelagert ist. Diese Achse 41 steht axial in beiden Richtungen über die Seitenwände 12, 22 der Gehäuseteile 10, 20 hinaus und dient im Wäschetrockner zum Antrieb der Wäschetrommel und des Prozessluftventilators. Der elektrische Antrieb gemäss der zweiten Ausführungsform hat identische äussere Gehäuseabmessungen wie die erste Ausführungsform. Somit sind für die Montage des elektrischen Antriebs im Wäschetrockner keine mechanischen Anpassungen nötig.

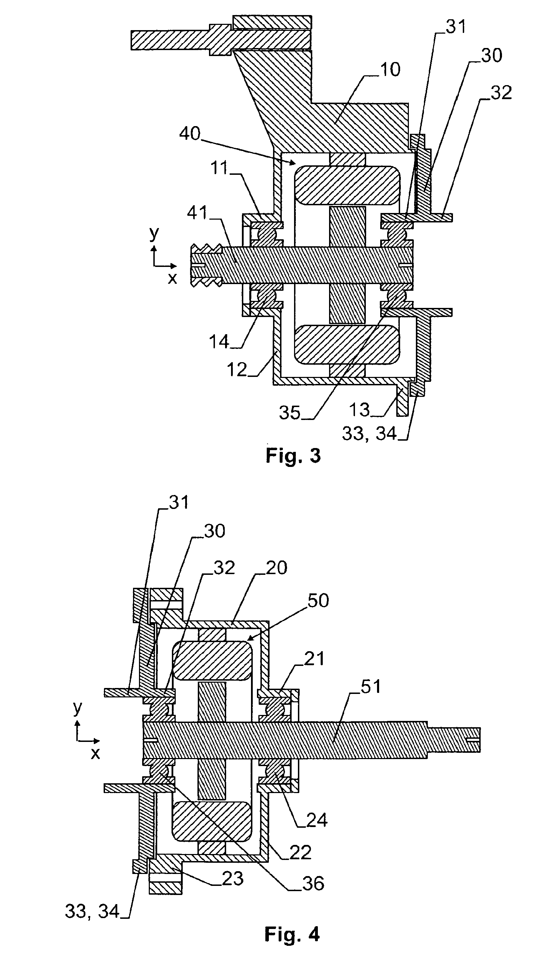

Figur 3 zeigt eine Schnittdarstellung durch einen elektrischen Antrieb gemäss einer dritten Ausführungsform umfassend ein Gehäuseteil 10, eine Trennwand 30 sowie einen Elektromotor 40. Ein solcher elektrischer Antrieb entspricht in seinem Aufbau und seiner Funktionalität dem elektrischen Antrieb gemäss der ersten Ausführungsform, wobei die in Figur 1 dargestellte "rechte Seite", d.h. das zweite Gehäuseteil 20, der zweite Elektromotor 50, sowie das zweite und vierte Achslager 24 und 36 weggelassen wurden. Somit bildet die geschlossene Trennwand 30 einen Abschluss des Gehäuses auf der offenen Seite des Gehäuseteils 10. Ein solcher elektrischer Antrieb wird z.B. in Situationen eingesetzt, in denen nur ein Elektromotor 40 nötig ist und es auf möglichst kompakte Abmessungen ankommt.

Alternativ zur dritten Ausführungsform zeigt Figur 4 eine Schnittdarstellung durch einen elektrischen Antrieb gemäss einer vierten Ausführungsform umfassend ein Gehäuseteil 20, eine Trennwand 30 sowie einen Elektromotor 50. Wie auch schon in der dritten Ausführungsform entspricht ein solcher elektrischer Antrieb gemäss der vierten Ausführungsform in seinem Aufbau und seiner Funktionalität dem elektrischen Antrieb gemäss der ersten Ausführungsform, wobei die in Figur 1 dargestellte "linke Seite", d.h. das erste Gehäuseteil 10, der erste Elektromotor 40, sowie das erste und dritte Achslager 14 und 35 weggelassen wurden. Somit bildet die geschlossene Trennwand 30 einen Abschluss des Gehäuses auf der offenen Seite des Gehäuseteils 20. Ein solcher elektrischer Antrieb wird z.B. in Situationen eingesetzt, in denen nur ein Elektromotor 50 nötig ist (welcher sich z.B. vom Elektromotor 40 unterscheiden kann) und es auf möglichst kompakte Abmessungen ankommt.

Figur 5 zeigt eine Schnittdarstellung durch einen elektrischen Antrieb gemäss einer fünften Ausführungsform umfassend ein Gehäuseteil 10, eine Trennwand 30, einen Elektromotor 40 sowie ein Getriebe 16. Somit entspricht der elektrische Antrieb gemäss der fünften Ausführungsform dem elektrischen Antrieb gemäss der dritten Ausführungsform (vgl. Figur 3) mit dem Unterschied, dass in der fünften Ausführungsform zusätzlich ein Getriebe 16 angeordnet ist, vorzugsweise an der Seitenwand 12 des Gehäuseteils 10 (in Figur 5 nur schematisch gezeigt). Mittels der Achse 41 des Elektromotors 40 wird eine Drehbewegung des Elektromotors 40, spezifisch des Rotors 42 des Elektromotors 40 auf das Getriebe 16 übertragen. Diese Drehbewegung wird im Getriebe 16 z.B. über-oder untersetzt, oder die Drehrichtung der Drehbewegung kann im Getriebe 16 bedarfsweise umgekehrt werden. Somit ist z.B. eine Reversierung der Trommel in einem Wäschetrockner möglich, ohne die Drehrichtung des Elektromotors 40 umzukehren.

Figur 6 zeigt eine Schnittdarstellung durch einen elektrischen Antrieb gemäss einer sechsten Ausführungsform umfassend ein Gehäuseteil 10, eine Trennwand 30, einen Elektromotor 40 sowie eine Übersetzungsvorrichtung 18. Somit entspricht der elektrische Antrieb gemäss der sechsten Ausführungsform dem elektrischen Antrieb gemäss der fünften Ausführungsform (vgl. Figur 5) mit dem Unterschied, dass in der sechsten Ausführungsform kein Getriebe 16 sondern eine Übersetzungsvorrichtung 18 an einer Halterungsvorrichtung 17 angeordnet ist, auf welche mittels eines Riemens 19 eine Drehbewegung des Elektromotors 40, spezifisch des Rotors 42 des Elektromotors 40 übertragen wird. Diese Drehbewegung wird durch die Übersetzungsvorrichtung 18 z.B. über- oder untersetzt.

Bemerkungen:
- In sämtlichen Schnittdarstellungen sind Schnittflächen schraffiert gezeichnet.
- Die Begriffe "axial" bzw. "lateral" beziehen sich auf eine Richtung entlang der ersten Achse des ersten Elektromotors (parallel zur ersten Koordinatenachse x) bzw. auf eine Richtung senkrecht dazu (parallel zur zweiten Koordinatenachse y).
- Als Elektromotoren können z.B. bürstenlose Gleichstrommotoren (sog. brushless DC-Motoren) eingesetzt werden, aber z.B. auch Asynchronmotoren. Neben der Grösse unterscheiden sich diese Motorentypen auch in der benötigten Regelung.
- In den gezeigten Ausführungsformen ist wie beschrieben die axiale Ausdehnung a' den Zwischenrings 60 identisch zu der axialen Ausdehnung a der Trennwand 30. Alternativ dazu kann die axiale Ausdehnung a' des Zwischenrings 60 grösser sein als die axiale Ausdehnung a der Trennwand 30, wodurch die axialen Gehäuseabmessungen des elektrischen Antriebs vergrössert werden. Somit kann z.B. ein Elektromotor mit einer vergrösserten Anzahl von Spulenwicklungen eingesetzt werden.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Elektrischer Antrieb für ein Haushaltsgerät, insbesondere für einen Wäschetrockner, umfassend
ein erstes Gehäuseteil (10) mit einer ersten Aufnahmevorrichtung (11) zur Aufnahme eines Achslagers (14), insbesondere an einer Seitenwand (12) des ersten Gehäuseteils (10), sowie mit einem ersten Verbindungselement (13) am ersten Gehäuseteil (10),
ein erstes Achslager (14) angeordnet an der ersten Aufnahmevorrichtung (11) des ersten Gehäuseteils (10),
ein zweites Gehäuseteil (20) mit einer zweiten Aufnahmevorrichtung (21) zur Aufnahme eines Achslagers (24), insbesondere an einer Seitenwand (22) des zweiten Gehäuseteils (20), sowie mit einem zweiten Verbindungselement (23) am zweiten Gehäuseteil (20),
eine Trennwand (30) zu einer Anordnung zwischen dem ersten Gehäuseteil (10) und dem zweiten Gehäuseteil (20), wobei die Trennwand (30) mindestens eine dritte Aufnahmevorrichtung (31) zur Aufnahme eines Achslagers (35) sowie ein drittes und ein viertes Verbindungselement (33, 34) aufweist,
ein zweites Achslager (24) angeordnet an der zweiten Aufnahmevorrichtung (21) des zweiten Gehäuseteils (20) und/oder ein drittes Achslager (35) angeordnet an der dritten Aufnahmevorrichtung (31) der Trennwand (30),
einen ersten Elektromotor (40) im ersten Gehäuseteil (10) mit einer ersten Achse (41), welche im ersten Achslager (14) sowie im zweiten oder im dritten Achslager (24, 35) rotierbar aufgenommen ist,
wobei das erste Gehäuseteil (10) mittels des ersten Verbindungselements (13) und des dritten Verbindungselements (33) mechanisch mit der Trennwand (30) verbunden ist und
wobei das zweite Gehäuseteil (20) mittels des zweiten Verbindungselements (23) und des vierten Verbindungselements (34) mechanisch mit der Trennwand (30) verbunden ist.

2. Elektrischer Antrieb nach Anspruch 1 weiterhin umfassend einen zweiten Elektromotor (50) im zweiten Gehäuseteil (20) mit einer zweiten Achse (51),
wobei die Trennwand (30) zusätzlich eine vierte Aufnahmevorrichtung (32) zur Aufnahme eines Achslagers (36) aufweist,
wobei ein viertes Achslager (36) an der vierten Aufnahmevorrichtung (32) der Trennwand (30) angeordnet ist,
wobei die erste Achse (41) des ersten Elektromotors (40) im ersten Achslager (14) am ersten Gehäuseteil (10) sowie im dritten Achslager (35) an der Trennwand (30) rotierbar aufgenommen ist, und
wobei die zweite Achse (51) des zweiten Elektromotors (50) im zweiten Achslager (24) am zweiten Gehäuseteil (20) sowie im vierten Achslager (36) an der Trennwand (30) rotierbar aufgenommen ist.

3. Elektrischer Antrieb nach einem der vorangehenden Ansprüche, wobei das erste Achslager (14), das zweite Achslager (24) und das dritte Achslager (35) koaxial zueinander angeordnet sind.

4. Elektrischer Antrieb nach einem der vorangehenden Ansprüche, wobei am ersten Gehäuseteil (10) zusätzlich ein erstes Getriebe (16) und/ oder eine Übersetzungsvorrichtung (18) angeordnet ist, insbesondere an der Seitenwand (12) des ersten Gehäuseteils (10), und wobei mittels der ersten Achse (41) des ersten Elektromotors (40) eine Drehbewegung eines Rotors (42) des ersten Elektromotors (40) auf das erste Getriebe (16) und/oder die Übersetzungsvorrichtung (18) übertragbar ist.

5. Elektrischer Antrieb nach einem der vorangehenden Ansprüche, wobei eine axiale Ausdehnung (a) der Trennwand (30) entlang einer ersten Koordinatenachse (x) maximal 25% einer lateralen Ausdehnung (b) der Trennwand (30) entlang einer zweiten Koordinatenachse (y) beträgt und wobei die zweite Koordinatenachse (y) senkrecht auf der ersten Koordinatenachse (x) steht.

6. Bausatz zur Herstellung eines elektrischen Antriebs für ein Haushaltsgerät, insbesondere für einen Wäschetrockner, umfassend
ein erstes Gehäuseteil (10) mit einer ersten Aufnahmevorrichtung (11) zur Aufnahme eines Achslagers (14) an einer Seitenwand (12) des ersten Gehäuseteils (10) sowie mit einem ersten Verbindungselement (13) am ersten Gehäuseteil (10),
ein zweites Gehäuseteil (20) mit einer zweiten Aufnahmevorrichtung (21) zur Aufnahme eines Achslagers (24) an einer Seitenwand (22) des zweiten Gehäuseteils (20) sowie mit einem zweiten Verbindungselement (23) am zweiten Gehäuseteil (20),
eine Trennwand (30) zu einer Anordnung zwischen dem ersten Gehäuseteil (10) und dem zweiten Gehäuseteil (20), wobei die Trennwand (30) mindestens eine dritte Aufnahmevorrichtung (31) zur Aufnahme eines Achslagers (35) sowie ein drittes und ein viertes Verbindungselement (33, 34) aufweist,
mindestens zwei Achslager (14, 24, 35, 36), mindestens einen Elektromotor (40, 50) zur Anordnung in einem der Gehäuseteile (10, 20) und mit einer Achse (41, 51), wobei die Achse (41, 51) derart ausgestaltet ist, dass sie in zwei Achslagern (14, 24, 35, 36) rotierbar aufnehmbar ist,
wobei das erste Gehäuseteil (10) mittels des ersten Verbindungselements (13) und des dritten Verbindungselements (33) mechanisch mit der Trennwand (30) verbindbar ist, und
wobei das zweite Gehäuseteil (20) mittels des zweiten Verbindungselements (23) und des vierten Verbindungselements (34) mechanisch mit der Trennwand (30) verbindbar ist.

7. Bausatz nach Anspruch 6 zusätzlich umfassend mindestens ein Getriebe (16) und/ oder eine Übersetzungsvorrichtung (18), welche derart ausgestaltet ist/sind, dass sie am ersten oder am zweiten Gehäuseteil (10, 20) montierbar ist/sind, insbesondere an der Seitenwand (12, 22) des Gehäuseteils (10, 20), und dass mittels der Achse (41, 51) des Elektromotors (40, 50) eine Drehbewegung eines Rotors (42, 52) des Elektromotors (40, 50) auf das Getriebe (16) und/oder die Übersetzungsvorrichtung (18) übertragbar ist.

8. Bausatz nach einem der Ansprüche 6 oder 7 zusätzlich umfassend einen Zwischenring (60) zu einer Anordnung zwischen dem ersten Gehäuseteil (10) und dem zweiten Gehäuseteil (20), wobei der Zwischenring (60) ein fünftes und ein sechstes Verbindungselement (63, 64) aufweist,
wobei das erste Gehäuseteil (10) mittels des ersten Verbindungselements (13) und des fünften Verbindungselements (63) mechanisch mit dem Zwischenring (60) verbindbar ist, und
wobei das zweite Gehäuseteil (20) mittels des zweiten Verbindungselements (23) und des sechsten Verbindungselements (64) mechanisch mit dem Zwischenring (60) verbindbar ist.

9. Bausatz nach Anspruch 8, wobei eine axiale Ausdehnung (a') des Zwischenrings (60) entlang einer ersten Koordinatenachse (x) einer axialen Ausdehnung (a) der Trennwand (30) entlang der ersten Koordinatenachse (x) entspricht und/ oder
wobei eine laterale Ausdehnung (b') des Zwischenrings (60) entlang einer zweiten Koordinatenachse (y) einer lateralen Ausdehnung (b) der Trennwand (30) entlang der zweiten Koordinatenachse (y) entspricht, und
wobei die zweite Koordinatenachse (y) senkrecht auf der ersten Koordinatenachse (x) steht.

10. Verfahren zur Herstellung eines elektrischen Antriebs für ein Haushaltsgerät, insbesondere für einen Wäschetrockner, mittels des Bausatzes nach einem der Ansprüche 6 bis 9.

11. Elektrischer Antrieb für ein Haushaltsgerät, insbesondere für einen Wäschetrockner, herstellbar aus mindestens einer Auswahl der Teile des Bausatzes nach einem der Ansprüche 6 bis 9 mit dem Verfahren nach Anspruch 10.
